# DEMANDE DE BREVET EUROPEEN

(11) **EP 4 571 954 A1**
(43) Date de publication de la demande: **18.06.2025**
(21) Numéro de dépôt: 24219604.6
(22) Date de dépôt: 12.12.2024
(51) Int. Cl.: H01M 50/105, H01M 50/178, H01M 50/289, H01M 50/529, H01M 50/51, H01M 50/512

(54) **BATTERIE DE STOCKAGE D ÉNERGIE**

(30) Priorité: 12.12.2023 FR 2314044
(71) Demandeur: AMPERE s.a.s., 92100 Boulougne-Billancourt (FR)
(72) Inventeur: Ruby, Stephane, 78280 Guyancourt (FR)
(74) Mandataire: Renault Group

(57) **Abrégé**

L'invention propose une batterie comprenant une pluralité de cellules électrochimiques de stockage d'énergie, chaque cellule électrochimiques de stockage étant de type poche et comprenant au moins une paire d'électrodes comprenant respectivement une anode et une cathode séparées par un séparateur et baignant dans un électrolyte, une poche entourant les électrodes, le séparateur et l'électrolyte, ladite cellule comprenant également au moins deux paires de languettes d'électrode reliées aux électrodes et faisant saillie à l'extérieur de la poche, chaque paire ayant une languette d'anode reliée à l'anode et une languette de cathode reliée à la cathode, la cellule présentant plusieurs côtés dont un côté long ayant une longueur supérieure ou au moins égale aux autres côtés, chaque paire de languettes d'électrode ayant au moins sa languette d'anode ou sa languette de cathode disposée sur ce même côté long, les cellules électrochimiques étant agencées de façon à ce que toutes les languettes d'électrode saillent perpendiculairement depuis un même plan, caractérisée en ce que les cellules électrochimiques sont associées en série ou en parallèle via des barres de connexion, les cellules électrochimiques étant disposées relativement les unes par rapport aux autres de manière à ce que les languettes de cathode soient alignées par rangées, et les languettes d'anode soient également alignées par rangées, chaque rangée de languettes de cathode étant adjacente à une rangée de languettes d'anode.

## Description

### Domaine technique de l'invention

L'invention concerne une batterie se composant d'une ou plusieurs cellules électrochimiques de stockage d'énergie. Il s'agit de cellules de type poche ou « pouch » selon la terminologie anglo-saxonne.

Les cellules sont capables de stocker l'électricité sous forme d'énergie potentielle chimique. Elles se chargent et se déchargent selon la direction d'un flux d'électrons créé lors de réactions chimiques. Elles peuvent être branchées en série et/ou en parallèle. Cet agencement permet de répondre aux besoins en tension, courant et capacité.

Ces batteries sont utilisées par exemple dans les véhicules électriques. Elles peuvent également être utilisées dans les domaines des machines agricoles, de l'aéronautique, du spatial, etc.

### Arrière-plan technique

On connait des cellules électrochimiques qui contiennent des électrodes, en l'espèce au moins une paire d'électrodes par cellule comprenant chacune au moins une anode et une cathode. Typiquement une cellule comporte plusieurs dizaines de paires d'électrodes.

Lors de la charge ou la décharge d'une cellule, des réactions chimiques (oxydoréduction) créent un flux d'électrons : le courant électrique. Plus précisément, l'anode (pôle négatif lors de la décharge) est oxydée, relâchant des électrons, et la cathode (pôle positif lors de la décharge) les reçoit.

Les électrons quittent l'anode pour traverser la charge qui y est connectée, et rentrent par la cathode. A l'intérieur de la cellule, des ions positifs transitent dans la même direction que les électrons, à travers l'électrolyte. Ainsi, la charge électrique de chaque côté reste neutre, car les charges négatives des électrons et positives des ions se compensent.

La décharge d'une cellule fait passer les électrodes (anode et cathode) d'un niveau énergétique élevé à un niveau plus faible. Ces réactions sont bien sûr réversibles : si on y fait passer un courant électrique dans le sens opposé, on recharge la cellule.

Une cellule est généralement de forme allongée, cylindrique ou parallélépipédique, avec deux extrémités libres opposées. Au moins une languette d'anode dépasse d'une extrémité libre, et au moins une languette de cathode dépasse de l'autre extrémité libre.

Sur ce type de cellule allongée, le chemin que doivent parcourir les électrons d'une languette à l'autre languette associée, c'est-à-dire entre le pôle positif (+) et le pôle négatif (-), est long, ce qui a pour résultat une résistance électrique interne importante de la cellule. Plus précisément, la DCR « Direct Current Résistance » est élevée.

Il est à noter que la DCR d'une cellule ne dépend pas que de la longueur du chemin à parcourir par les électrons entre les pôles + et -, car plusieurs composantes constituent cette DCR, dont le chemin électronique, mais aussi la résistance au transfert de charge entre les électrodes, par exemple. Toutefois, la part de la DCR liée la longueur du chemin à parcourir par les électrons peut représenter une part très significative de la DCR totale (selon le type de cellule, son architecture, les caractéristiques de sa chimie, etc).

L'échauffement de la cellule en charge et décharge étant directement lié à cette DCR, la cellule s'échauffe beaucoup lorsque la DCR est élevée, ce qui oblige à beaucoup la refroidir, ou nécessite de brider ses performances lorsque la température de la cellule atteint un seuil.

L'objectif de la présente invention consiste à proposer une solution pour réduire la DCR de la cellule, et donc son échauffement. Cela permet de réduire le besoin en refroidissement, d'où un gain potentiel en coût, complexité, masse et encombrement du système de refroidissement, de réduire les bridages de performances pour causes thermiques de la batterie, et d'améliorer potentiellement la durée de vie de la batterie car les cellules s'échauffent moins.

### Résumé de l'invention

Ce but est atteint grâce à une batterie comprenant une pluralité de cellules électrochimiques de stockage d'énergie, chaque cellule électrochimiques de stockage étant de type poche et comprenant au moins une paire d'électrodes comprenant respectivement une anode et une cathode séparées par un séparateur et baignant dans un électrolyte, une poche entourant les électrodes, le séparateur et l'électrolyte, ladite cellule comprenant également au moins deux paires de languettes d'électrode reliées aux électrodes et faisant saillie à l'extérieur de la poche, chaque paire ayant une languette d'anode reliée à l'anode et une languette de cathode reliée à la cathode, la cellule présentant plusieurs côtés dont un côté long ayant une longueur supérieure ou au moins égale aux autres côtés, chaque paire de languettes d'électrode ayant au moins sa languette d'anode ou sa languette de cathode disposée sur ce même côté long, les cellules électrochimiques étant agencées de façon à ce que toutes les languettes d'électrode saillent perpendiculairement depuis un même plan, caractérisée en ce que les cellules électrochimiques sont associées en série ou en parallèle via des barres de connexion, les cellules électrochimiques étant disposées relativement les unes par rapport aux autres de manière à ce que les languettes de cathode soient alignées par rangées, et les languettes d'anode soient également alignées par rangées, chaque rangée de languettes de cathode étant adjacente à une rangée de languettes d'anode.

L'idée principale de cette invention consiste à utiliser plusieurs paires de languettes d'électrode pour réduire le chemin électronique. La démultiplication du nombre de languettes permet de les disposer ailleurs qu'aux extrémités libres, et en particulier sur un côté long, de telle sorte que le chemin entre deux languettes d'une même paire soit court.

La réduction du chemin électronique entraine la réduction de la DCR de la cellule - en particulier la partie de la DCR liée à la résistance de la cellule - et son échauffement en fonctionnement.

Le fait d'utiliser plusieurs paires de languettes que l'on positionne en parallèle (électriquement parlant) permet de réduire très fortement la résistance électrique équivalente de la cellule et réduit le courant transitant par chaque chemin électronique associé à une paire de languettes, ce qui limite encore davantage son échauffement.

Cela permet également d'améliorer l'homogénéité de fonctionnement de la cellule (en particulier en termes de potentiel local, de densité de courant, et de température), ce qui améliore en particulier la durabilité de la cellule.

Selon les différents modes de réalisation de l'invention, qui pourront être pris ensemble ou séparément :
- chaque paire de languettes d'électrode a sa languette d'anode et sa languette de cathode disposées sur ce même côté long.
- les paires de languettes d'électrode sont disposées de façon adjacentes les unes à côté des autres sur le côté long, avec une alternance entre languette d'anode et languette de cathode.
- chaque languette d'anode d'une paire est placée à côté d'une languette de cathode d'une paire adjacente.
- la cellule présente une section rectangulaire avec deux côtés longs opposés, et deux côté courts opposés, les côtés longs étant plus longs que les côtés courts.

### Brève description des figures

D'autres caractéristiques et avantages de l'invention apparaitront au cours de la lecture de la description détaillée qui va suivre pour la compréhension de laquelle on se reportera aux dessins annexés dans lesquels :
La figure 1 est une vue schématique d'une cellule de l'art antérieur.
La figure 2 est une vue schématique d'une cellule selon une première configuration possible de l'invention.
La figure 3 est une vue schématique d'une cellule selon une seconde configuration possible de l'invention.
La figure 4 est une vue schématique d'une batterie comprenant un agencement de cellules selon la figure 3.
La figure 5 est une vue schématique d'une variante de batterie comprenant un agencement de cellules selon la figure 3.
La figure 6 est une vue schématique d'une autre variante de batterie comprenant un agencement de cellules selon la figure 3.
La figure 7 illustre une plaque d'isolation électrique et thermique.
La figure 8 est une vue schématique en coupe d'une batterie munie de la plaque de la figure 7.

### Description détaillée de l'invention

Dans la suite de la description, des éléments présentant une structure identique ou des fonctions analogues seront désignés par des mêmes références.

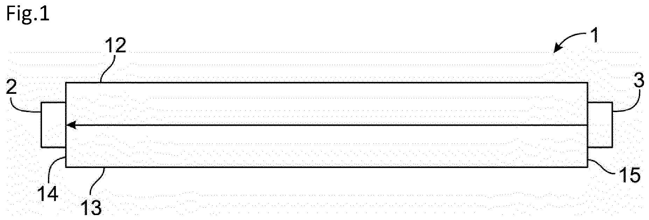

La figure 1 montre une cellule 1 électrochimique de l'art antérieur, de type poche.

Cette cellule 1 est allongée, et possède une direction d'extension principale, qui donne la longueur de la cellule 1.

La section est de forme rectangulaire avec deux côtés longs 12, 13 opposés, et deux côté courts 14, 15 opposés qui font office d'extrémités libres vu la forme de la cellule 1.

Une languette de cathode 2 saille depuis un premier côté court 14, et une languette d'anode 3 saille depuis un second côté court 15. Ainsi les languettes 2, 3 sont placées aux niveau des extrémités libres.

Cette cellule 1 possède uniquement une paire de languettes 2, 3, qu'on appelle paire de languettes d'électrode car les languettes 2,3 sont reliées à des électrodes placées à l'intérieur de la cellule 1 et non visibles sur les figures.

De façon classique, la cellule 1 est dotée de plusieurs paires d'électrodes, en l'espèce plusieurs paires d'électrodes comprenant chacune respectivement une anode et une cathode, placées dans la poche, séparées par un séparateur, et baignant dans un électrolyte. La cellule 1 comporte typiquement plusieurs dizaines de paires d'anode et de cathode. A l'intérieur de cette cellule de type poche, les anodes sont reliées ensemble et connectées à la languette d'anode 3 qui sort de la cellule et de même les cathodes sont reliées ensemble et connectées à la languette de cathode 2 qui sort de la cellule.

En l'espèce la poche est délimitée par les différents côtés 12,13,14,15 mentionnés précédemment.

La languette d'anode 3 est reliée à l'anode, et la languette de cathode 2 est reliée à la cathode.

La flèche traversant la cellule 1 illustre le chemin électronique emprunté par les électrons. Ce chemin est long car il traverse toute la longueur de la cellule 1 sur toute sa direction d'extension, depuis une extrémité jusqu'à l'autre extrémité libre. Dans cette configuration, la résistance électrique interne est importante. Or plus la résistance est importante, plus la cellule 1 s'échauffe lors des phases de charge et de décharge.

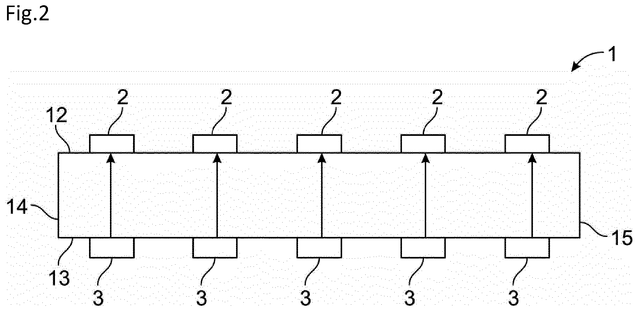

La figure 2 montre une cellule 1 électrochimique de type poche selon une première configuration possible de l'invention.

Comme pour la figure 1, la cellule 1 est allongée, et possède une direction d'extension principale, qui donne la longueur de la cellule 1.

La section est de forme rectangulaire avec deux côtés longs 12,13 opposés et deux côtés courts 14,15 opposés qui font office d'extrémités libres vu la forme de la cellule.

À l'intérieur de la cellule 1 se trouve également au moins une paire d'électrodes comprenant une anode et une cathode, comme dans l'art antérieur.

Dans cette configuration de cellule, il y a plusieurs paires de languettes d'électrode 2,3. Plus précisément, il y a au moins deux paires de languettes d'électrode 2,3.

Dans le cas illustré, il y a cinq paires de languettes d'électrode 2,3. Il pourrait y en avoir plus ou moins.

Toutes les languettes d'électrode 2,3 sont disposées sur les côtés longs 12, 13. Aucune languette n'est disposée sur les côtés courts 14,15. Ainsi les chemins électroniques liés aux paires de languettes 2,3 d'électrode se développent dans la hauteur de la cellule 1, et sont donc beaucoup plus courts, ce qui réduit la résistance électrique associée.

La formule permettant de calculer la résistance électrique d'un matériau conducteur électrique est la suivante : R=rho*L/S

avec R la résistance électrique (en Ohm), rho la résistivité du matériau en Ohmmètre, L la longueur du conducteur électrique traversé par le courant (en mètre) (c'est ici la dimension qui nous intéresse principalement, à savoir le chemin électronique), et S la section du conducteur électrique (en mètre carré).

Ainsi, plus la valeur L est petite, plus la valeur R sera petite, et moins il y aura d'échauffement.

Au final le chemin électronique parcouru est réduit, non seulement par la présence de plusieurs paires de languettes 2,3 d'électrode, mais également par leur disposition sur les côtés longs 12,13 plutôt que les côtés courts 14,15.

Puisque la résistance de la cellule 1 est réduite, et ainsi a fortiori sa DCR aussi, la cellule 1 s'échauffe nettement moins en fonctionnement.

Toutes les languettes d'anode 3 sont reliées à l'anode, et toutes les languettes de cathode 2 sont reliées à la cathode, ce qui a pour effet d'obtenir au final des paires de languettes 2,3 d'électrodes qui sont connectées en parallèle électriquement parlant. Cette architecture en parallèle permet de réduire très fortement la résistance électrique équivalente de la cellule 1, et réduit le courant transitant par chaque chemin électronique associé à une paire de languettes 2,3 d'électrode, ce qui limite encore davantage son échauffement.

Dans le cas illustré, toutes les languettes d'anode 3 sont disposées sur un côté long inférieur 13, et toutes les languettes de cathode 2 sont disposées sur un côté long supérieur 12. De cette façon, chaque paire de languettes 2,3 d'électrode a au moins sa languette d'anode 3 ou sa languette de cathode 2 disposée sur un même côté long 12,13.

En l'espèce, les électrons circulent depuis le côté long inférieur 13 vers le côté long supérieur 12.

Le chemin parcouru par les électrons est ainsi très court puisqu'il correspond à la distance entre le côté long inférieur 13 et le côté long supérieur 12.

De préférence, les languettes 2, 3 appartenant à une même paire sont disposées en vis-à-vis afin que le chemin parcouru par les électrons ne soit pas oblique (dans le volume de la cellule), mais soit perpendiculaire à la direction d'extension. Les électrons circulent ainsi transversalement au sein de la cellule 1, sur un chemin correspondant à la hauteur de la cellule 1.

Ainsi le concept proposé met en parallèles cinq chemins électroniques liés aux cinq paires de languettes 2,3 d'électrode. Ceci réduit l'intensité I du courant électrique passant par chaque chemin d'électrons associé à chaque paire de languettes 2,3 d'électrode, ce qui permet de réduire l'échauffement associé à ce passage d'électrons.

La formule permettant de calculer l'échauffement lié au passage d'un courant dans un conducteur électrique (effet Joule) est le suivant : P=R*I

avec P la puissance thermique générée (en watt), R la résistance électrique du conducteur (en Ohm), et I l'intensité du courant le traversant (en Ampère).

La résistance électrique globale de la cellule 1 est réduite également par la mise en parallèle des cinq résistances unitaires associées aux cinq chemins électroniques.

La formule permettant de calculer la résistance électrique globale est la suivante : 1/Req = somme des 1/Ri
avec Req la résistance équivalente correspondant à la résistance électrique globale, et Ri la résistance unitaire associée à un chemin électronique.

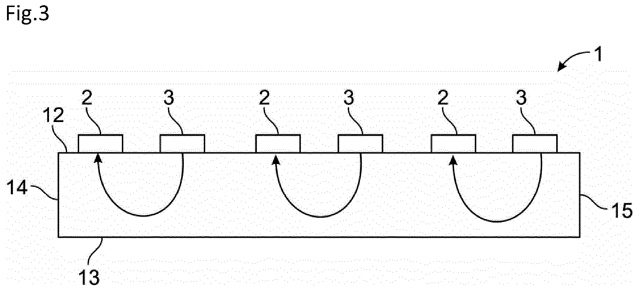

La figure 3 montre une cellule 1 électrochimique de type poche selon une seconde configuration possible de l'invention.

Comme pour la figure 1, la cellule 1 est allongée, et possède une direction d'extension principale, qui donne la longueur de la cellule 1.

La section est de forme rectangulaire avec deux côtés longs 12,13 opposés et deux côtés courts 14,15 opposés qui font office d'extrémités libres vu la forme de la cellule 1.

À l'intérieur de la cellule 1 se trouvent également au moins une paire d'électrodes, et de préférence plusieurs paires d'électrodes, chaque paire d'électrodes comportant une anode et une cathode, comme dans l'art antérieur.

Dans cette configuration de cellule, il y a plusieurs paires de languettes 2,3 d'électrode. Plus précisément, il y a au moins deux paires de languettes 2,3 d'électrode.

Dans le cas illustré, il y a trois paires de languettes 2,3 d'électrode. Il pourrait y en avoir plus ou moins.

Toutes les languettes 2,3 d'électrode sont disposées sur un même côté long 12. Aucune languette 2,3 n'est disposée sur les côtés courts. Ainsi les chemins électroniques liés aux paires de languettes 2,3 d'électrode se développent dans une partie de la hauteur de la cellule 1 et sur des petits tronçons longitudinaux correspondant à la distance entre les deux languettes 2,3 d'électrode d'une même paire. A nouveau, ces chemins électroniques sont donc beaucoup plus courts que dans l'art antérieur, ce qui réduit la résistance électrique associée. Pour passer d'une languette d'électrode à l'autre, les électrons partent d'un point de départ sur le côté long 12, au niveau de la languette d'anode 3, rentrent vers l'intérieur de la cellule 1 et sont déviées pour revenir sur le même côté long 12, un peu plus loin, au niveau de la languette de cathode 2. Ainsi le chemin électronique s'opère sur un petit tronçon longitudinal. Chaque chemin électronique est illustré par une flèche reliant la languette d'anode 3 à la languette de cathode 2.

Plus les languettes 2,3 d'une même paire sont rapprochées, plus le chemin électronique sera court. Toutefois, il faut les écarter suffisamment pour obtenir une bonne homogénéité de fonctionnement de la cellule.

Au final le chemin électronique parcouru est réduit, non seulement par la présence de plusieurs paires de languettes 2,3 d'électrode, mais également par leur disposition sur un seul côté.

Puisque la résistance de la cellule 1 est réduite, et ainsi a fortiori sa DCR aussi, la cellule 1 s'échauffe nettement moins en fonctionnement.

Les paires de languettes 2,3 d'électrode sont disposées de façon adjacentes les unes à côté des autres sur le côté long 12, avec une alternance entre languette d'anode 3 et languette de cathode 2. Chaque languette d'anode 3 d'une paire est placée à côté d'une languette de cathode 2 d'une paire adjacente.

Toutes les languettes d'anode 3 sont reliées à l'anode, et toutes les languettes de cathode 2 sont reliées à la cathode, ce qui a pour effet d'obtenir au final des paires de languettes 2,3 d'électrodes qui sont connectées en parallèle électriquement parlant. Cette architecture en parallèle permet de réduire très fortement la résistance électrique équivalente de la cellule 1, et réduit le courant transitant par chaque chemin électronique associé à une paire de languettes 2,3 d'électrode, ce qui limite encore davantage son échauffement.

La configuration présentée en figure 3, avec les languettes d'électrode 2,3 sur un même côté 12, permet d'obtenir au final une cellule 1 qui prend moins de place en hauteur dans le module ou dans le pack batterie.

Ainsi, pour un même volume de pack batterie, il est possible d'embarquer des cellules 1 avec une enveloppe plus haute, donc avec davantage de chimie embarquée, donc d'énergie et d'autonomie.

Un autre avantage découle de cette configuration, celui de la simplification des opérations de soudure et de manipulation, car toutes les languettes 2,3 d'électrode sont directement accessibles sur le dessus de la cellule 1, sur le même côté long 12, et les soudures peuvent être réalisées simultanément et sans retournement de la cellule 1.

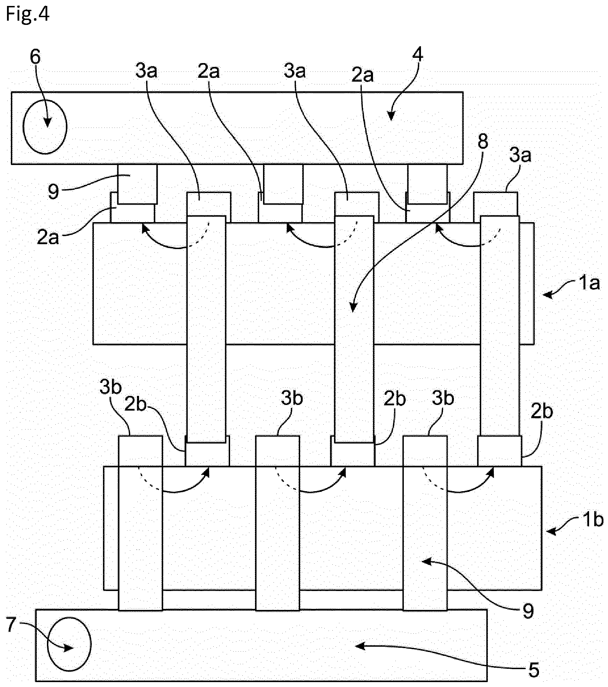

Les figures 4, 5 et 6 montrent différents exemples de pack batterie dans lesquels sont connectées plusieurs cellules 1 conformes à la figure 3, associées en série ou en parallèle.

Dans chaque exemple, il y a une barre de connexion positive 4 et une barre de connexion négative 5, qui correspondent aux bornes positives et bornes négatives de la batterie.

Dans chaque exemple, il y a également des barres de connexion intermédiaire 8,9 qui permettent de relier des languettes 2,3 entre elles, ou qui permettent de relier une languette 2,3 à une barre de connexion positive 4 ou à une barre de connexion négative 5.

Les barres de connexion positive 4, barres de connexion négative 5, et barres de connexion intermédiaire 8,9 consistent en des barres de conduction électrique classiques, généralement en cuivre ou en aluminium, sur lesquelles sont fixées les languettes 2,3 par soudage ou par des connecteurs électriques. Les cellules 1 électrochimiques sont disposées relativement les unes par rapport aux autres de manière à ce que les languettes de cathode 2 soient alignées par rangées, et les languettes d'anode 3 soient également alignées par rangées, chaque rangée de languettes de cathode 2 étant adjacente à une rangée de languettes d'anode 3.

Sur la figure 4, il y a un groupe de deux cellules 1a,1b connectées en série.

Plus précisément, toutes les languettes de cathode 2a de la première cellule 1a sont raccordées à une barre de connexion positive 4, directement ou via des barres intermédiaires 9, et toutes les languettes d'anode 3b de la seconde cellule 1b sont raccordées à une barre de connexion négative 5, directement ou via des barres intermédiaires 9.

Les languettes d'anode 3a de la première cellule 1a sont raccordées aux languettes de cathode 2b de la seconde cellule 1b via des barres intermédiaires 8.

Plus précisément, la languette d'anode 3a de la première paire de la première cellule 1a est raccordée à la languette de cathode 2b de la première paire de la seconde cellule 1b via une première barre intermédiaire 8.

La languette d'anode 3a de la seconde paire de la première cellule 1a est raccordée à la languette de cathode 2b de la seconde paire de la seconde cellule 1b via une seconde barre intermédiaire.

Et enfin, la languette d'anode 3a de la troisième paire de la première cellule 1a est raccordée à la languette de cathode 2b de la troisième paire de la seconde cellule 1b via une troisième barre intermédiaire.

On peut disposer de la même manière N cellules en série, avec N supérieur ou égal à 2.

Dans une batterie, il peut y avoir un groupe de deux cellules 1a,1b, ou de N cellules ainsi connectées en série.

Dans une batterie, il peut y avoir plusieurs tels groupes de deux cellules 1a, 1b ou de N cellules en série, les groupes étant mis en parallèle, avec un raccordement de toutes les barres de connexion négative 5 par un conducteur 7 d'une part, et un raccordement de toutes les barres de connexion 4 positive par un conducteur 6 d'autre part.

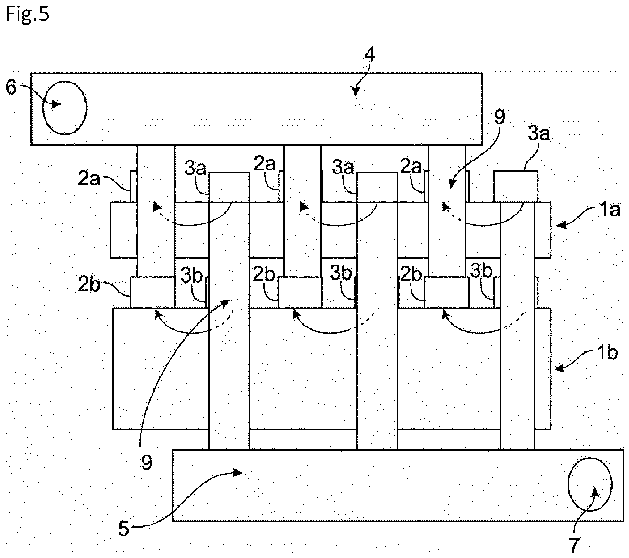

Sur la figure 5, il y a un groupe de deux cellules 1a,1b connectées en parallèle. Plus précisément, toutes les languettes de cathode 2a,2b de la première cellule 1a et de la seconde cellule 1b sont raccordées à une barre de connexion positive 4 via des barres intermédiaires 9, et toutes les languettes d'anode 3a,3b de la première cellule 1a et de la seconde cellule 1b sont raccordées à une barre de connexion négative 5 via d'autres barres intermédiaires 9.

On peut disposer de la même manière N cellules en parallèle, avec N supérieur ou égal à 2.

Dans une batterie, il peut y avoir un groupe de deux cellules 1a,1, ou de N cellules ainsi connectées en parallèle.

Dans une batterie, il peut y avoir plusieurs tels groupes de deux cellules 1a, 1b ou de N cellules en parallèle, les groupes étant mis en série, avec un raccordement de toutes les barres de connexion négative 5 par un conducteur 7 d'une part, et un raccordement de toutes les barres de connexion positive 4 par un conducteur 6 d'autre part.

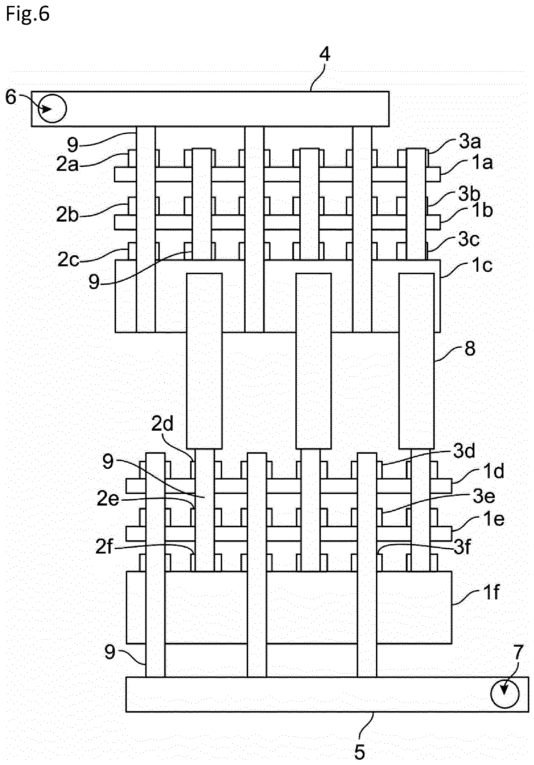

Sur la figure 6, il y a un groupe de six cellules 1a,1b,1c,1d,1e,1f, avec un premier sous-groupe comprenant trois cellules 1a, 1b, 1c connectées en parallèle, et un second sous-groupe comprenant trois autres cellules 1d,1e,1f connectées en parallèle, les deux sous-groupes étant connectés en série.

En l'espèce, toutes les languettes de cathode 2a,2b,2c des cellules 1a, 1b, 1c du premier sous-groupe sont raccordées à une barre de connexion positive 4, et toutes les languettes d'anode 3d,3e,3f des cellules 1d,1e,1f du second sous-groupe sont raccordées à une barre de connexion négative 5.

Puis, toutes les languettes d'anode 3a,3b,3c des premières paires des cellules 1a, 1b, 1c du premier sous-groupe sont raccordées aux languettes de cathode 2d,2e,2f des premières paires des cellules 1d,1e,1f du second sous-groupe, avec une première barre de connexion intermédiaire 8.

Toutes les languettes d'anode 3a,3b,3c des secondes paires des cellules 1a, 1b, 1c du premier sous-groupe sont raccordées aux languettes de cathode 2d,2e,2f des secondes paires des cellules 1d,1e,1f du second sous-groupe, avec une seconde barre de connexion intermédiaire 8.

Et enfin, toutes les languettes d'anode 3a,3b,3c des troisièmes paires des cellules 1a,1b,1c du premier sous-groupe sont raccordées aux languettes de cathode 2d,2e,2f des troisièmes paires des cellules 1d,1e,1f du second sous-groupe, avec une troisième barre de connexion intermédiaire 8.

Dans une batterie, il peut y avoir un groupe avec six cellules 1 telles que décrites précédemment, comme illustré sur la figure 6.

Dans une batterie, il peut y avoir plusieurs groupes avec six cellules 1a, 1b, 1c, 1d, 1e, 1f telles que décrites précédemment, les groupes étant mis en parallèle, avec un raccordement de toutes les barres de connexion négative 5 un conducteur 7 d'une part, et un raccordement de toutes les barres de connexion positive 4 un conducteur 6 d'autre part.

Les figures 4 et 5 et 6 ne sont que des exemples proposés, et beaucoup d'autres combinaisons existent et rentrent dans le cadre de la présente invention.

Pour le montage de cellules 1 de la variante Fig.3, avec toutes les languettes 2,3 qui saillent depuis un même côté longitudinal 12, il est également possible d'avoir recours à une solution complémentaire qui va apporter des bénéfices en simplicité du procédé de montage, en compacité, et en thermique de la batterie. Cette solution consiste à utiliser une plaque 10 d'isolation électrique et thermique, c'est à dire avec une faible conductivité thermique et une faible conductivité électrique. Par exemple il peut s'agir d'une plaque 10 de mica.

Concrètement, cette plaque 10 est positionnée au niveau des languettes 2,3, dans un plan perpendiculaire à la direction d'extension des languettes 2,3, c'est-à-dire parallèlement au côté long 12.

La plaque 10 est disposée à proximité du côté long 12 supérieur de la cellule 1, d'où saillent les languettes 2,3. Ce côté long 12 correspond à une face supérieure 12 de la cellule 1.

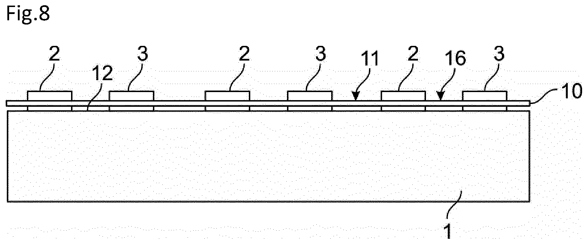

Encore plus précisément, la plaque 10 est disposée entre la face supérieure 12 de la cellule 1, et les soudures des languettes 2,3 entre elles, comme cela est illustré en figure 8.

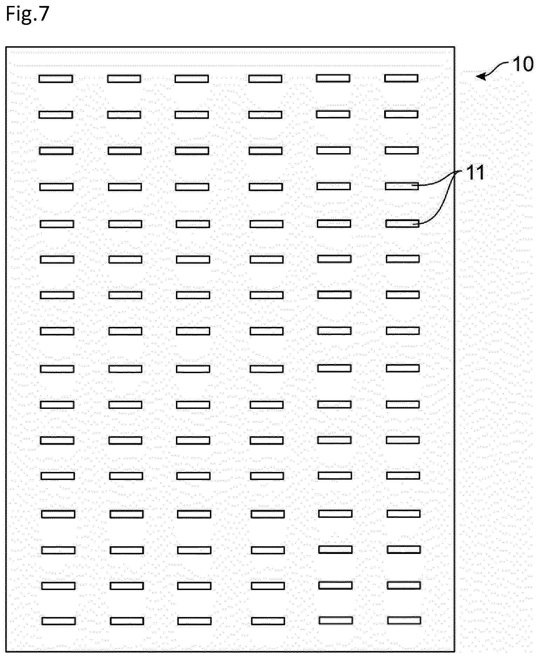

Cette plaque 10 présente des perforations 11 permettant de faire passer les languettes 2,3, comme illustré aux figures 7 et 8.

Lors du montage, les cellules 1 sont positionnées verticalement, avec les languettes 2,3 dressées verticalement. On positionne alors la plaque 10 sur le dessus des cellules 1, en faisant passer les languettes 2,3 dans les perforations 11 de la plaque 10. On rabat alors les extrémités libres des languettes 2,3 sur le dessus de la plaque 10, c'est-à-dire sur une face supérieure de la plaque 10, distale des cellules 1, puis on les soude entre elles, éventuellement via des barres de connexion 9.

Le fait de pouvoir rabattre les languettes 2,3 sur une plaque 10 permet de réduire l'encombrement vertical du montage, ce qui permettra de mettre davantage d'éléments chimiques (c'est-à-dire d'électrolyte, et de surface active d'électrode), donc d'énergie et d'autonomie dans un volume donné de batterie. De plus, la présence de la plaque 10 isolante thermiquement permet de souder les languettes 2,3 sans risquer d'endommager les cellules 1 qui sinon pourraient subir la chaleur du soudage. Habituellement pour éviter ceci il est d'usage de laisser un espace assez conséquent entre le dessus des cellules 1 et la soudure des languettes 2,3 ; la présence de cette plaque 10 isolante thermiquement permet de réduire cet espace et ici encore, de gagner en encombrement vertical du montage, donc en densité d'énergie de la batterie.

Un autre intérêt lors du fonctionnement de la batterie, est que cette plaque 10 isolante thermiquement va réduire la chaleur transmise par les languettes 2,3 et les barres de connexion 9 vers les cellules 1. Il restera néanmoins la chaleur transmise par conduction dans les languettes 2,3 vers les cellules 1 auxquelles elles sont connectées. En effet, en fonctionnement normal de la batterie, les languettes 2,3 et les barres de connexion 9 concentrent le courant électrique et s'échauffent davantage que les cellules 1, et leur transmettent donc de la chaleur. La présence de la plaque 10 isolante réduit cette transmission thermique. Le résultat est que la température des cellules 1 sera plus faible grâce à cette plaque 10.

Encore une fois, cela permet d'avoir moins de limitations de performances de la batterie en usage et en recharge pour cause de thermique des cellules 1 trop élevée, et également une meilleure durabilité des cellules 1.

Cette solution utilisant une plaque 10 isolante électriquement et thermiquement permet donc de simplifier le process de montage et de soudure de la batterie, d'améliorer sa compacité au bénéfice de l'autonomie, et de réduire la thermique de la batterie au bénéfice de sa durabilité et de ses performances en usage et en charge.

Les configurations montrées aux figures citées ne sont que des exemples possibles, nullement limitatifs, de l'invention qui englobe au contraire les variantes de formes et de conceptions à la portée de l'homme de l'art.

## Revendications

1. Batterie comprenant une pluralité de cellules (1) électrochimiques de stockage d'énergie, chaque cellule (1) électrochimiques de stockage étant de type poche et comprenant au moins une paire d'électrodes comprenant respectivement une anode et une cathode séparées par un séparateur et baignant dans un électrolyte, une poche entourant les électrodes, le séparateur et l'électrolyte, ladite cellule (1) comprenant également au moins deux paires de languettes (2,3) d'électrode reliées aux électrodes et faisant saillie à l'extérieur de la poche, chaque paire ayant une languette d'anode (3) reliée à l'anode et une languette de cathode (2) reliée à la cathode, la cellule (1) présentant plusieurs côtés dont un côté long (12) ayant une longueur supérieure ou au moins égale aux autres côtés, chaque paire de languettes (2,3) d'électrode ayant au moins sa languette d'anode (3) ou sa languette de cathode (2) disposée sur ce même côté long (12), les cellules (1) électrochimiques étant agencées de façon à ce que toutes les languettes d'électrode (2,3) saillent perpendiculairement depuis un même plan,
**caractérisée en ce que** les cellules (1) électrochimiques sont associées en série ou en parallèle via des barres de connexion (4,5,8,9), les cellules (1) électrochimiques étant disposées relativement les unes par rapport aux autres de manière à ce que les languettes de cathode (2) soient alignées par rangées, et les languettes d'anode (3) soient également alignées par rangées, chaque rangée de languettes de cathode (2) étant adjacente à une rangée de languettes d'anode (3).

2. Batterie selon la revendication précédente, **caractérisée en ce que** chaque paire de languettes d'électrode a sa languette d'anode (3) et sa languette de cathode (2) disposées sur ce même côté long (12).

3. Batterie selon la revendication précédente, **caractérisée en ce que** les paires de languettes (2,3) d'électrode sont disposées de façon adjacentes les unes à côté des autres sur le côté long (12), avec une alternance entre languette d'anode (3) et languette de cathode (2).

4. Batterie selon l'une des revendications précédentes, **caractérisée en ce qu'**elle présente une section rectangulaire avec deux côtés longs (12, 13) opposés, et deux côté courts (14,15) opposés, les côtés longs (12, 13) étant plus longs que les côtés courts (14,15).

5. Batterie selon l'une des revendications précédentes, **caractérisée en ce que** les cellules (1) électrochimiques sont agencées de façon à ce que toutes les languettes d'électrode (2,3) saillent perpendiculairement depuis un même plan.

6. Batterie selon la revendication précédente, **caractérisée en ce que**, pour une première cellule (1a) électrochimique associée en série à une seconde cellule (1b) électrochimique, toutes les languettes de cathode (2a) de la première cellule (1a) électrochimique sont solidarisées à une barre de connexion positive (4), et toutes les languettes d'anode (3a) de la première cellule (1a) électrochimique sont solidarisées à des languettes de cathode (2b) de la seconde cellule (1b) électrochimique via des barres de connexion intermédiaires (8), et toutes les languettes d'anode (3b) de la seconde cellule (1b) électrochimique sont solidarisées à une barre de connexion négative (5).

7. Batterie selon la revendication 5, **caractérisée en ce que**, pour une première cellule (1a) électrochimique associée en parallèle à une seconde cellule (1b) électrochimique, toutes les languettes de cathode (2a, 2b) des deux cellules (1a,1b) sont solidarisées à une barre de connexion positive (4), et toutes les languettes d'anode (3a,3b) des deux cellules (1a,1b) sont solidarisées à une barre de connexion négative (5).

8. Batterie selon l'une des revendications 5 à 8, **caractérisée en ce qu'**elle comprend une plaque (10) d'isolation électrique et thermique disposée au niveau des languettes (2,3) d'électrode, dans un plan perpendiculaire à la direction d'extension des languettes (2,3) d'électrode.

9. Batterie selon la revendication précédente, **caractérisée en ce que** ladite plaque (10) présente des perforations (11) traversées par les languettes (2,3) d'électrodes, les extrémités libres des languettes (2,3) d'électrode étant repliées sur une face supérieure (16) de la plaque (10).
